(19) Europäisches Patentamt / European Patent Office / Office européen des brevets

(11) **EP 3 671 505 B1**

(12) **FASCICULE DE BREVET EUROPEEN**

(45) Date de publication et mention de la délivrance du brevet:
**12.11.2025 Bulletin 2025/46**

(21) Numéro de dépôt: **19217172.6**

(22) Date de dépôt: **17.12.2019**

(51) Classification Internationale des Brevets (IPC):
*H04L 9/40* (2022.01)  *G06F 21/34* (2013.01)
*G06F 21/44* (2013.01)  *G06F 21/72* (2013.01)

(52) Classification Coopérative des Brevets (CPC):
**G06F 21/34; G06F 21/44; G06F 21/725;**
**H04L 63/0838**

(54) **PROCÉDÉ DE DÉTERMINATION D'UN COMPORTEMENT DE CARTE À PUCE, ET SERVEUR ASSOCIÉ**

VERFAHREN ZUR BESTIMMUNG DES VERHALTENS EINER CHIPKARTE UND ENTSPRECHENDER SERVER

METHOD FOR DETERMINING A BEHAVIOUR OF A CHIP CARD, AND ASSOCIATED SERVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2018 FR 1873371**

(43) Date de publication de la demande:
**24.06.2020 Bulletin 2020/26**

(73) Titulaire: **IDEMIA France**
**92400 Courbevoie (FR)**

(72) Inventeurs:
• **DEPRUN, Jean-François**
**92400 COURBEVOIE (FR)**
• **LESEIGNEUR, Gilles**
**92400 COURBEVOIE (FR)**

(74) Mandataire: **Barreau, Cédric**
**Idemia France - IST - Service IP**
**2, place Samuel de Champlain**
**92400 Courbevoie (FR)**

(56) Documents cités:
**WO-A1-2017/212157    CN-B- 102 435 975**
**US-A1- 2018 285 546**

**Description**

Domaine Technique

La présente invention se rapporte au domaine des cartes à puce, et concerne plus particulièrement un procédé de détermination d'un comportement d'une carte à puce.

L'invention s'applique notamment, mais de façon non exclusive, aux cartes bancaires de format ID-1 spécifiées dans la norme ISO / IEC 7810, présentant les dimensions 85,6 millimètres par 53,98 millimètres par 0,76 millimètres.

L'invention peut en outre s'appliquer aux cartes à puce avec contacts dont les caractéristiques sont détaillées dans la norme ISO / IEC 7816, et peut aussi s'appliquer aux cartes à puce sans contact dont les caractéristiques sont détaillées dans la norme ISO / IEC 14443.

Technique antérieure

De façon connue, une carte à puce peut comporter une horloge permettant de réaliser des opérations en fonction du temps, par exemple des opérations de génération et d'affichage d'un code de vérification dynamique (OTP pour « One Time Password » en terminologie anglo-saxonne, ou dCVV pour « Dynamic Card Verification »), utilisés pour sécuriser des transactions, par exemple des paiements bancaires en ligne. Lors d'un paiement en ligne, l'utilisateur d'une telle carte à puce indique le numéro de carte PAN (« Primary Account Number » en terminologie anglo-saxonne), la date d'expiration de la carte, le nom du porteur de carte, ainsi qu'un code de vérification dynamique affiché par la carte, un nouveau code de vérification dynamique étant généré et affiché plusieurs fois par jour.

Pour réaliser l'opération de génération d'un code de vérification dynamique, la carte doit être synchronisée temporellement avec un serveur adapté pour vérifier le code. Si l'horloge de la carte n'est pas précise, la carte peut être désynchronisée du serveur, ce qui peut engendrer une erreur et un arrêt du paiement bancaire.

L'horloge peut ainsi être calibrée lors de la fabrication de la carte à puce. Un procédé de calibration connu comprend une étape de réglage de l'horloge, dans laquelle un terminal de calibration enregistre, dans l'horloge de la carte à puce, la date et l'heure courante d'une horloge de référence, telle que l'horloge atomique.

Ensuite, pendant une première durée d'une dizaine de jours, l'horloge incrémente la date et l'heure enregistrées, en fonction de la fréquence de résonnance de son oscillateur.

A la fin de cette première durée, la date et l'heure courante de l'horloge sont lues par le terminal de calibration (ou un autre terminal de calibration), puis comparées à la date et l'heure courante de l'horloge de référence. Le résultat de la comparaison permet au terminal de calibration de calculer la dérive temporelle naturelle de l'horloge, et ainsi de calculer des données de calibration permettant de corriger la dérive temporelle naturelle.

Ces données de calibration sont ensuite enregistrées dans l'horloge. En outre, le terminal de calibration enregistre une nouvelle fois, dans l'horloge de la carte à puce, la date et l'heure courante de l'horloge de référence.

Ensuite, pendant une deuxième durée se comptant en jours, l'horloge incrémente la date et l'heure enregistrées, en fonction de la fréquence de résonnance de son oscillateur et des données de calibration.

A la fin de cette deuxième durée, la date et l'heure courante de l'horloge sont lues par le terminal de calibration (ou un autre terminal de calibration), puis comparées à la date et l'heure courante de l'horloge de référence.

Si la dérive temporelle corrigée de l'horloge est inférieure à 0,8 secondes par jour, les données de calibration permettent de corriger de manière acceptable la dérive temporelle naturelle de l'horloge. Dans le cas contraire, les données de calibration ne corrigent pas de manière acceptable la dérive temporelle naturelle de l'horloge, et le procédé est alors réitéré de sorte à calculer de nouvelles données de calibration.

Ce procédé de calibration comprend beaucoup d'étapes, mises en œuvre pendant la fabrication de la carte, et nécessite l'écoulement de longues durées entre les étapes d'enregistrement et les étapes de lecture. La durée de fabrication de la carte à puce est ainsi importante.

La durée de fabrication peut être encore allongée lors de la réitération du procédé, lorsque les données de calibration calculées ne permettent de corriger de manière acceptable la dérive temporelle naturelle de l'horloge.

En outre, les données de calibration ne permettent pas de prendre en compte des modifications de la dérive temporelle survenant après la fabrication de la carte, ces modifications étant typiquement dues à l'âge de la carte ou à des facteurs externes présents dans l'environnement de la carte, par exemple la température, le bruit, l'absence ou la présence de rayons ultraviolets. WO 2017/212157 décrit un procédé de calibration d'une horloge d'un circuit de carte à puce. CN 102 435 975 décrit un procédé de calibration d'une horloge d'un compteur électrique. US 2018/285546 A1 décrit une détermination de la modification de dérivation après la distribution d'un générateur de codes à usage unique.

Exposé de l'invention

L'invention est définie par les revendications jointes.

La présente invention concerne un procédé de détermination d'un comportement d'une carte à puce, dite première carte à puce, mis en œuvre par un serveur, comprenant les étapes suivantes :

- obtention d'une première donnée temporelle de référence correspondant à un instant de réglage d'une horloge de carte à puce, et d'une deuxième donnée temporelle de référence correspondant à un instant de lecture d'une première donnée temporelle de ladite horloge,
- détermination d'une dérive temporelle associée à la première carte à puce en fonction de ladite première donnée temporelle de référence et de ladite deuxième donnée temporelle de référence,
- détermination d'un comportement de la première carte à puce à partir de ladite dérive temporelle.

La détermination de la dérive temporelle par le serveur permet de se passer du calcul de données de calibration pour la première carte à puce lors de sa fabrication.

En effet, le serveur connaissant une dérive temporelle associée à la première carte à puce, il peut utiliser cette dérive temporelle pour déterminer le comportement de la première carte à puce. Il n'est pas nécessaire de corriger cette dérive temporelle.

Ainsi, il n'est pas nécessaire d'enregistrer ces données de calibration dans la première carte à puce puis de vérifier si ces données de calibration permettent de corriger la dérive temporelle de la première carte à puce. Le procédé permet donc de réduire la durée de fabrication de la première carte à puce.

En outre, le procédé peut permettre de réduire le taux de rebut associé à la fabrication de la première carte à puce. En effet, pendant la fabrication de la première carte à puce, chaque étape de lecture ou d'écriture de données dans la première carte à puce peut abîmer la première carte à puce. Le nombre d'outils utilisés lors de la fabrication est en outre diminué.

En outre, la détermination de la dérive temporelle par le serveur permet de corriger avec précision la dérive temporelle. En effet, la fréquence de résonance de l'oscillateur de l'horloge de la première carte à puce peut varier en fonction de l'âge de la carte et / ou en fonction de facteurs externes présents dans l'environnement de stockage de la carte, tels que la température, le bruit, l'absence ou la présence de rayons ultraviolets. De tels facteurs peuvent changer après la fabrication de la carte, et être pris en compte pour le calcul de la dérive temporelle.

En outre, le procédé selon l'invention étant mis en œuvre par un serveur, il peut être réalisé tout au long de la vie de la première carte à puce. Ainsi, la dérive temporelle peut être déterminée avec précision, une longue durée pouvant séparer l'instant de réglage de l'instant de lecture.

Chaque dérive calculée par le serveur peut en outre être utilisée pour développer de nouveaux produits, afin de sélectionner une architecture de carte ou un composant robuste.

Dans un mode de réalisation particulier, la première carte à puce comprend ladite horloge.

Dans un mode de réalisation particulier, une deuxième carte à puce comprend ladite horloge, la première carte à puce et la deuxième carte à puce faisant parties du même lot de fabrication de cartes à puce.

Le comportement de la première carte à puce peut être déterminé à partir de la dérive temporelle dt de la deuxième carte à puce car la première carte à puce et la deuxième carte à puce font partie du même lot de fabrication. Ainsi, l'horloge de la première carte à puce comprend des similitudes avec l'horloge de la deuxième carte à puce, dues à des conditions de fabrication et / ou stockage similaires ou identiques des horloges ou des cartes à puce. Aussi, il est possible de déterminer le comportement de plusieurs cartes à puce d'un même lot de fabrication en déterminant la dérive temporelle dt d'une ou deux cartes à puce de ce lot de fabrication.

La durée de fabrication de la première carte à puce est ainsi d'avantage diminuée.

Dans un mode de réalisation particulier, le serveur est un serveur d'authentification, apte à authentifier la première carte à puce.

Dans un mode de réalisation particulier, la dérive temporelle est en outre déterminée en fonction d'une information sur la fabrication ou l'utilisation de la première carte à puce, stockée dans le serveur.

Dans un mode de réalisation particulier, ladite deuxième donnée temporelle de référence est reçue :

- pendant une phase de fabrication de la deuxième carte à puce, ou
- pendant une phase d'utilisation de la deuxième carte à puce, au cours d'une première transaction mise en œuvre au moyen de ladite deuxième carte à puce,

ladite première donnée temporelle de l'horloge étant en outre reçue.

Dans un mode de réalisation particulier, ladite deuxième donnée temporelle de référence est reçue :

- pendant une phase de fabrication de la première carte à puce, ou
- pendant une phase d'utilisation de la première carte à puce, au cours d'une première transaction mise en œuvre au moyen de ladite première carte à puce,

ladite première donnée temporelle de l'horloge étant en outre reçue.

L'obtention de la deuxième donnée temporelle de référence pendant la phase d'utilisation de la carte permet de réduire la durée de fabrication de la carte.

L'obtention de la deuxième donnée temporelle de référence pendant la phase de fabrication de la carte permet de ne pas modifier le protocole d'échange entre les terminaux de transaction et le serveur, et ainsi de ne pas modifier les terminaux de transaction.

Dans un mode de réalisation particulier, l'étape de détermination d'un comportement comprend une obtention d'une donnée temporelle de l'horloge de la première carte à puce, dite deuxième donnée temporelle de l'horloge et d'une troisième donnée temporelle de référence correspondant à un instant de lecture de la deuxième donnée temporelle de l'horloge, au cours d'une deuxième transaction mise en œuvre au moyen de ladite première carte à puce,

dans lequel le comportement déterminé est déterminé en fonction de la troisième donnée temporelle de référence.

Dans un mode de réalisation particulier, le comportement de la première carte à puce déterminé est une désynchronisation temporelle de la première carte à puce par rapport au serveur,

l'étape de détermination d'un comportement de la première carte à puce comprenant :

- une détermination d'un code de sécurité corrigé à partir de la dérive temporelle.

Dans un mode de réalisation particulier, le comportement de la première carte à puce déterminé est une désynchronisation temporelle de la première carte à puce par rapport au serveur, et

l'étape de détermination d'un comportement de la première carte à puce comprend en outre :

- une comparaison du code de sécurité corrigé avec un code de sécurité reçu, ledit code de sécurité reçu ayant été émis par la première carte à puce.

Dans un mode de réalisation particulier, le procédé comprend en outre une authentification de la première carte à puce, en fonction du résultat de la comparaison du code de sécurité déterminé avec le code de sécurité reçu.

Dans un mode de réalisation particulier, ladite deuxième donnée temporelle de référence est reçue pendant une phase d'utilisation de la première carte à puce, au cours d'une troisième transaction mise en œuvre au moyen de la première carte à puce,

la détermination de la dérive temporelle comprenant une définition de la dérive temporelle à une valeur donnée,
la dérive temporelle étant modifiée si le code de sécurité corrigé déterminé est différent du code de sécurité reçu.

Dans un mode de réalisation particulier, la valeur donnée est déterminée en fonction d'une dérive temporelle précédemment déterminée.

L'invention concerne en outre un serveur apte à mettre en œuvre un procédé tel que décrit ci-dessus.

Dans un mode particulier de réalisation, les différentes étapes du procédé tel que décrit ci-dessus sont déterminées par des instructions de programmes d'ordinateur.

En conséquence, l'invention vise aussi un programme d'ordinateur sur un support d'informations (ou support d'enregistrement), ce programme étant susceptible d'être mis en œuvre par un serveur ou plus généralement dans un ordinateur, ce programme comportant des instructions adaptées à la mise en œuvre des étapes d'un procédé tel que décrit ci-dessus.

Ce programme peut utiliser n'importe quel langage de programmation, et être sous la forme de code source, code objet, ou de code intermédiaire entre code source et code objet, tel que dans une forme particulièrement compilée, ou dans n'importe quelle autre forme souhaitable.

L'invention vise aussi un support d'information (ou support d'enregistrement) lisible par un serveur ou plus généralement par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une mémoire non volatile réinscriptible (de type « EEPROM » ou « Flash NAND » par exemple), ou tel qu'une « ROM », par exemple un « CD ROM » ou une « ROM » de circuit microélectronique, ou encore un moyen d'enregistrement magnétique, par exemple une disquette (« floppy disc ») ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

[Fig. 1] La figure 1 représente, de manière schématique, un serveur conforme à un exemple de mode de réalisation de l'invention ;

[Fig. 2] La figure 2 représente, de manière schématique, un exemple de vue en coupe d'une carte à puce dont le comportement peut être déterminé par le serveur de la figure 1 ;

[Fig. 3] La figure 3 représente, sous forme d'un organigramme, les principales étapes d'un procédé de détermination d'un comportement d'une carte à puce, conforme à un exemple de mode de réalisation de l'invention ;

[Fig. 4] La figure 4 est un graphe représentant différents instants associés à des données temporelles pouvant être reçues dans certaines étapes d'un procédé de détermination conforme à un exemple de mode de réalisation de l'invention ;

[Fig. 5] La figure 5 est un graphe représentant différentes périodes pour une carte à puce et un serveur conforme à un exemple de mode de réalisation de l'invention ;

[Fig. 6] La figure 6 est un graphe représentant différentes périodes pour une carte à puce et un serveur conforme à un exemple de mode de réalisation de l'invention ;

[Fig. 7] La figure 7 représente, sous forme d'un organigramme, les principales sous étapes d'une étape de détermination d'un comportement d'un procédé de détermination, conforme à un exemple de mode de réalisation de l'invention ; et

[Fig. 8] La figure 8 représente, sous forme d'un organigramme, les principales étapes d'un procédé de détermination d'un comportement d'une carte à puce, conforme à un exemple de mode de réalisation de l'invention.

Description des modes de réalisation

La présente invention se rapporte au domaine des cartes à puce (dites aussi « cartes à microcircuit »), et concerne plus particulièrement un procédé détermination d'un comportement d'une carte à puce.

L'invention s'applique notamment, mais de façon non exclusive, aux cartes bancaires de format ID-1 spécifiées dans la norme ISO / IEC 7810, présentant les dimensions 85,6 millimètres par 53,98 millimètres par 0,76 millimètres.

L'invention peut en outre s'appliquer aux cartes à puce avec contacts dont les caractéristiques sont détaillées dans la norme ISO / IEC 7816, et peut aussi s'appliquer aux cartes à puce sans contact dont les caractéristiques sont détaillées dans la norme ISO / IEC 14443.

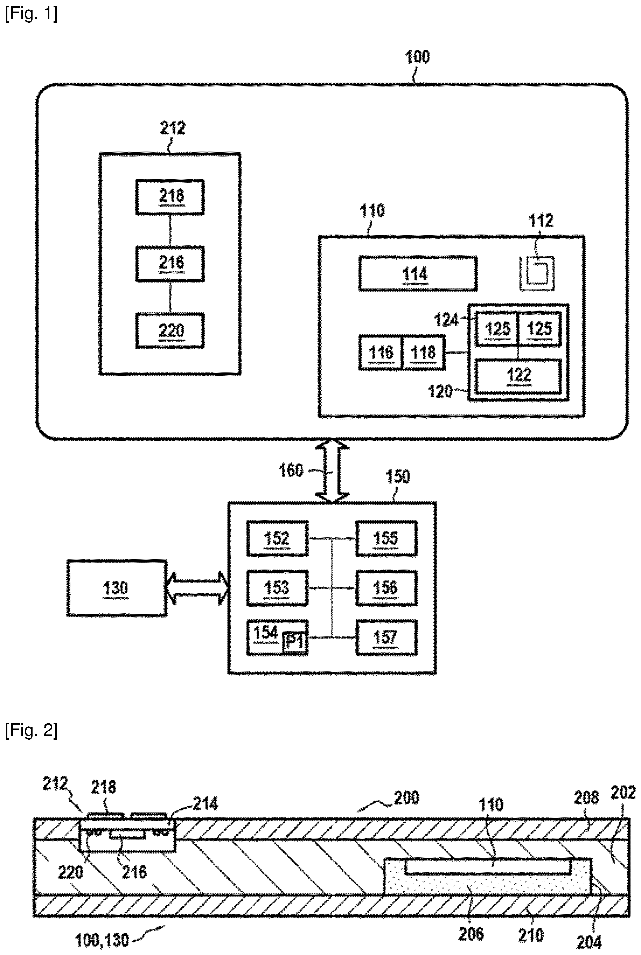

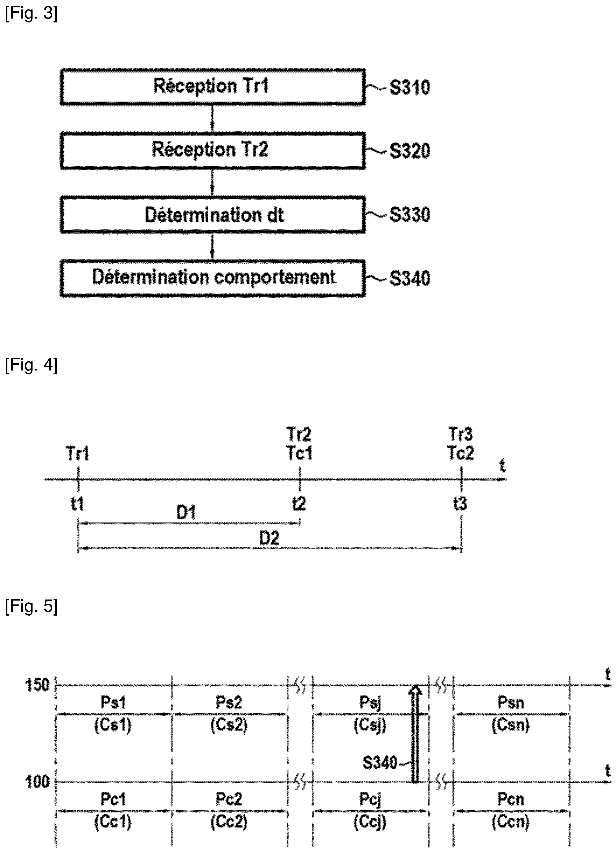

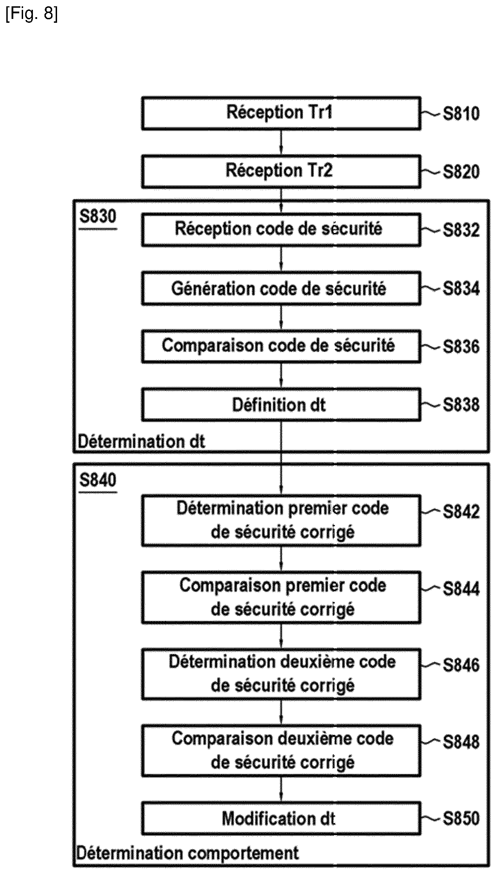

La **figure 1** représente, de manière schématique, un serveur 150 conforme à un exemple de mode de réalisation de l'invention, apte à mettre en œuvre un procédé de détermination d'un comportement d'une ou plusieurs cartes à puce 100, 130, conforme à un exemple de mode de réalisation, par exemple le procédé décrit en référence à la figure 3 ou le procédé décrit en référence à la figure 8.

Dans l'exemple de la figure 1, le serveur 150 est apte à déterminer le comportement d'une première carte à puce 100 et d'une deuxième carte à puce 130, la première carte à puce 100 et la deuxième carte à puce 130 appartenant à un même lot de fabrication de cartes à puce. On comprendra cependant que le serveur est apte à déterminer le comportement d'une ou plusieurs autres cartes à puce, appartenant au même lot de fabrication ou à un lot de fabrication différent.

Chaque carte à puce 100, 130 comporte un circuit 110 comportant une horloge 120, un microprocesseur 116, une mémoire 118, une antenne 112 de communication sans fil et peut comporter une batterie 114.

Par « horloge », on entend un circuit électronique émettant en continu des impulsions périodiques permettant un décompte précis du temps pour un système.

L'horloge 120 comporte un oscillateur 122 et un circuit de traitement 124 du signal émis par l'oscillateur, le circuit de traitement 124 comportant des registres 125. Le circuit de traitement 124 est configuré pour compter (ou mesurer ou déterminer) le temps.

Le circuit 110 peut être un circuit électronique souple, par exemple adapté pour générer et afficher un code de vérification dynamique (OTP pour « One Time Password » en terminologie anglo-saxonne, ou dCVV pour « Dynamic Card Verification » en terminologie anglo-saxonne) de la carte, permettant une sécurisation des transactions, par exemple des paiements bancaires en ligne. En outre, le circuit 110 peut comporter un écran adapté à afficher un code de vérification dynamique.

L'horloge est typiquement une horloge temps réel, ayant pour acronyme RTC (« Real-Time Clock » en terminologie anglo-saxonne), pouvant utiliser l'échelle de temps UTC (« Temps Universel Coordonné » ou « Coordinated Universal Time » en terminologie anglo-saxonne).

De plus, l'oscillateur 122 peut comprendre un oscillateur à quartz basse fréquence, résonnant par exemple à une fréquence de résonnance fr d'environ 32 kilohertz. En outre, l'oscillateur 122 peut comprendre un circuit oscillant comprenant une résistance et une capacité.

Les registres 125 comprennent par exemple des registres calendaires ou temporels, au moins un registre de calibration, et peuvent comporter des registres de configuration RTC (par exemple des registres de détection d'erreurs, de lecture et écriture, ou concernant un type d'alarme). Dans un exemple, le circuit de traitement 124 comporte au moins un registre parmi un premier registre temporel adapté pour compter les secondes, un deuxième registre temporel adapté pour compter les minutes, un troisième registre temporel adapté pour compter les heures, un quatrième registre temporel adapté pour compter les jours, un cinquième registre temporel adapté pour compter les mois et un sixième registre temporel adapté pour compter les années.

Chaque carte à puce 100, 130 peut en outre comporter un circuit ou module séparé du circuit 110, tel que le module 212 décrit en référence à la figure 2.

Le serveur 150 est par exemple un serveur d'authentification, apte à authentifier la carte à puce lors d'une transaction réalisée au moyen de ladite carte à puce. Le serveur 150 est typiquement adapté pour vérifier un code de vérification dynamique lors d'une transaction.

Le terminal 150 présente l'architecture conventionnelle d'un ordinateur. Le terminal 150 comporte notamment un processeur 152, un système d'exploitation 153, une mémoire morte 154 (de type « ROM »), une mémoire non volatile réinscriptible 155 (de type « EEPROM » ou « Flash NAND » par exemple), une mémoire volatile réinscriptible 156 (de type « RAM »), et une interface de communication 157.

Dans cet exemple, la mémoire morte 154 constitue un support d'informations (ou d'enregistrement) conforme à un mode de réalisation particulier de l'invention. Dans la mémoire morte 154 est stocké un programme d'ordinateur P1 permettant au serveur 150 de mettre en œuvre un procédé de détermination conforme à un exemple de mode de réalisation de l'invention. En variante, le programme d'ordinateur P1 est stocké dans la mémoire non volatile réinscriptible 155.

La **figure 2** représente, de manière schématique, un exemple de vue en coupe de la première carte à puce 100 et / ou de la deuxième carte à puce 130 de la figure 1. La carte à puce 100, 130 comporte un corps de carte 200 comportant une première couche 202 pouvant comporter une cavité 204. Le circuit 110 est alors positionné dans la cavité 204 et est fixé au moyen d'une résine 206. Le corps de carte 200 peut en outre comporter au moins une autre couche, par exemple une deuxième couche 208 et une troisième couche 210, la première couche 202 étant par exemple positionnée entre la deuxième couche 208 et la troisième couche 210. En variante, le corps de carte 200 comporte uniquement la première couche 202.

La carte à puce 100, 130 peut comporter un module 212 séparé du circuit 110, ce module 212 pouvant être connecté au circuit 110, typiquement dans le cas où des données temporelles sont obtenues via une transaction sans code de sécurité (par exemple une transaction bancaire classique en contact ou sans contact). En variante, le module 212 peut ne pas être connecté au circuit 110, typiquement dans le cas où des données temporelles sont obtenues via une transaction avec code de sécurité.

Dans un exemple, le module 212 comporte un substrat 214 et une puce électronique 216 fixée au substrat 214. La puce électronique 216 est adaptée pour effectuer un paiement bancaire selon le standard « EMV » (acronyme de la terminologie anglo-saxonne « Europay Mastercard Visa »). La puce électronique 216 peut ainsi mettre en œuvre des applications permettant d'effectuer des transactions bancaires.

Le module 212 peut comporter des contacts externes 218, adaptés pour effectuer un paiement avec contact, et / ou une antenne 220, adaptée pour effectuer un paiement sans contact. En variante, la carte à puce 100, 130 ne comporte pas de module 212.

De façon alternative l'antenne 220 peut être dans une couche 202, 208, 210 du corps de carte, ou dans le circuit 110, et être connectée au module 212.

Les figures 3 et 8 représentent des procédés de détermination d'un comportement d'une ou plusieurs cartes à puces, conformes à des exemples de modes de réalisation de l'invention.

Dans la suite de la description, il est considéré que chacun des procédés de détermination des figures 3 et 8 est mis en œuvre par le serveur 150 de la figure 1, afin de déterminer le comportement de la première carte à puce 100 de la figure 1, ou le comportement de la deuxième carte à puce 130 de la figure 1.

En variante, chacun de ces procédés de détermination peut être mis en œuvre par un système comprenant le serveur 150 et un ou plusieurs autres serveurs présentant une architecture similaire au serveur 150, chaque serveur du système étant apte à communiquer avec les autres serveurs du système.

La **figure 3** représente un procédé de détermination d'un comportement d'une ou plusieurs cartes à puce, conforme à un exemple de mode de réalisation de l'invention.

A un instant de réglage t1, une première donnée temporelle de référence Tr1 peut être enregistrée dans l'horloge 120 de la première carte à puce 100, typiquement dans les registres 125 temporels de l'horloge 120. Cet enregistrement peut être effectué par un terminal de personnalisation, par exemple pendant une phase de fabrication de la carte à puce 100.

La première donnée temporelle de référence Tr1 correspond typiquement à la date et l'heure courante, à l'instant de réglage t1, d'une horloge de référence, telle que l'horloge atomique ou l'horloge du terminal personnalisation.

La première donnée temporelle de référence Tr1 est incrémentée par l'horloge 120, après son enregistrement dans l'horloge 120.

Suite à cet enregistrement, le serveur 150 peut obtenir, dans une étape S310, la première donnée temporelle de référence Tr1 correspondant à l'instant de réglage t1. Cette première donnée temporelle de référence Tr1 est typiquement transmise par le terminal de personnalisation ayant enregistré cette donnée dans l'horloge 120, puis reçue par le serveur 150. En variante, le serveur 150 reçoit un message du terminal de personnalisation ou de la première carte à puce 100, puis détermine la première donnée temporelle de référence Tr1 en consultant l'horloge de référence au moment de la réception du message.

Ensuite, dans une étape S320, le serveur 150 peut obtenir une deuxième donnée temporelle de référence Tr2, correspondant à un premier instant de lecture t2 d'une première donnée temporelle Tc1 de l'horloge 120 de la première carte à puce 100.

Au cours de cette étape S320, la première donnée temporelle de l'horloge Tc1 peut en outre être reçue par le serveur 150.

La première donnée temporelle de l'horloge Tc1 correspond typiquement à la première donnée temporelle de référence Tr1 incrémentée par l'horloge 120 pendant une première durée D1 entre l'instant de réglage t1 et le premier instant de lecture t2 (voir **figure 4).** Plus précisément, la première donnée temporelle de l'horloge Tc1 peut correspondre à la première donnée temporelle de référence Tr1 incrémentée par l'horloge 120 en fonction de la fréquence de résonnance de l'oscillateur 122 de l'horloge 120 pendant la première durée D1.

La deuxième donnée temporelle de référence Tr2 peut correspondre à la première donnée temporelle de référence Tr1 incrémentée par l'horloge de référence (par exemple en fonction de la fréquence de résonnance de l'oscillateur de l'horloge de l'horloge de référence), pendant la première durée D1. La deuxième donnée temporelle de référence Tr2 correspond ainsi typiquement à la date et l'heure courante, au premier instant de lecture, de l'horloge de référence.

La deuxième donnée temporelle de référence Tr2 et / ou la première donnée temporelle Tc1 sont typiquement reçues par le serveur 150 pendant une phase de fabrication de la première carte à puce 100, suite à la lecture de la première donnée temporelle Tc1 par un terminal, typiquement le terminal de personnalisation ayant enregistré la première donnée temporelle de référence Tr1 dans la carte à puce 100, ou un autre terminal de personnalisation. Le terminal transmet alors la deuxième donnée temporelle de référence Tr2 et / ou la première donnée temporelle Tc1. En variante, le serveur 150 reçoit un message du terminal ou de la première carte à puce 100, puis détermine la deuxième donnée temporelle de référence Tr2 en consultant l'horloge de référence au moment de la réception du message.

En variante, la deuxième donnée temporelle de référence Tr2 est reçue pendant une phase d'utilisation de la première carte à puce 100, la phase d'utilisation étant postérieure à la phase de fabrication, et démarrant typiquement après la remise de la carte à son utilisateur. La deuxième donnée temporelle de référence Tr2 est par exemple obtenue au cours d'une transaction, dite première transaction, mise en œuvre au moyen de la première carte à puce 100. Un terminal de transaction, dit premier terminal de transaction, peut alors lire la première donnée temporelle de l'horloge Tc1, puis transmettre la deuxième donnée temporelle de référence Tr2 et la première donnée temporelle de l'horloge Tc1 au serveur 150, par exemple dans un champ personnalisé d'une requête d'authentification.

La première transaction est typiquement une transaction pour laquelle aucun code de sécurité n'est envoyé (par exemple une transaction bancaire par l'intermédiaire de la puce électronique 216, sans contact ou avec contact). En variante, la première transaction peut être une transaction utilisant un code de vérification dynamique.

En variante, le serveur 150 reçoit un message du terminal de transaction ou de la première carte à puce 100, puis détermine la deuxième donnée temporelle de référence Tr2 en consultant l'horloge de référence au moment de la réception du message.

Dans une étape S330, le serveur 150 peut déterminer une dérive temporelle dt associée à la première carte à puce 100. Cette dérive temporelle dt est typiquement la dérive temporelle de l'horloge 120 de la première carte à puce 100, en fonction de la première donnée temporelle de référence Tr1, de la deuxième donnée temporelle de référence Tr2 et de la première donnée temporelle de l'horloge Tc1.

La dérive temporelle dt est typiquement calculée en soustrayant la deuxième donnée temporelle de référence Tr2 à la première donnée temporelle de l'horloge Tc1 (première soustraction), en soustrayant la première donnée temporelle de référence Tr1 à la deuxième donnée temporelle de référence Tr2 (deuxième soustraction), puis en divisant le résultat de la première soustraction par le résultat de la deuxième soustraction.

La dérive temporelle dt de l'horloge 120, peut donc être calculée à partir de la formule suivante :

[Math. 1]

$$dt = \frac{Tc1 - Tr2}{Tr2 - Tr1}$$

La dérive temporelle dt peut en outre être déterminée en fonction d'une ou plusieurs informations sur la fabrication de la première carte à puce 100, stockées dans le serveur 150. En variante, ces informations sur la fabrication sont stockées dans un autre serveur, tel qu'un serveur utilisé lors de la fabrication de la première carte à puce 100. Le serveur 150 peut alors communiquer avec cet autre serveur pour obtenir ces informations sur la fabrication.

Chaque information sur la fabrication peut être une information sur un composant de la carte (typiquement l'horloge 120), ou une information sur les conditions de fabrication, ou une information sur le stockage de la carte.

L'information sur un composant de la carte peut être par exemple un nom, un numéro de série, un fabriquant, un numéro de lot de fabrication, ou une date de fabrication du composant.

L'information sur les conditions de fabrication peut être un outil utilisé pour la fabrication, une date de fabrication, un horaire de fabrication, ou une usine de fabrication de la carte.

L'information sur le stockage peut être le lieu de stockage, la durée de stockage, la température de stockage, etc.

Le serveur 150 peut en effet utiliser ces informations afin de déterminer une potentielle modification de la dérive temporelle au cours de la vie de la carte à puce. La détermination de cette potentielle modification peut se baser sur une dérive temporelle calculée pour une autre carte du même lot de fabrication. En effet, les informations sur la fabrication sont typiquement similaires pour chaque carte à puce d'un même lot de fabrication. Les informations peuvent ainsi être utilisées pour identifier les cartes ayant subies une ou des conditions de fabrication similaires lesdites conditions ayant été identifiées comme corrélées à une potentielle modification de la dérive temporelle.

La dérive temporelle dt peut en outre être déterminée en fonction d'une ou plusieurs informations sur l'utilisation de la première carte à puce 100, par exemple stockées dans le serveur 150, telles que le principal pays dans lequel la carte est utilisée, le type d'utilisation, le type d'utilisateur, etc. Le serveur 150 peut là encore utiliser de telles informations pour déterminer une potentielle modification de la dérive temporelle au cours de la vie de la carte à puce.

Après avoir déterminé la dérive temporelle dt, le serveur 150 enregistrer cette dérive temporelle dt, en association avec un identifiant de la première carte à puce 100, et / ou un identifiant du lot de fabrication de la première carte à puce 100.

Les étapes S320 et S330 peuvent être réitérées, pendant la durée de vie de la première carte à puce 100, afin de mettre à jour la dérive temporelle dt, typiquement de manière périodique (par exemple tous les mois, ou toutes les 10 transactions) et / ou sous réception d'une requête de mise à jour. Cette réitération des étapes S320 et S330 permet d'obtenir une dérive temporelle dt plus précise.

En variante, les étapes S310, S320 et S330 sont mises en œuvre pour la deuxième carte à puce 130 au lieu de la première carte à puce 100. Ainsi, la première donnée temporelle de référence Tr1 est enregistrée dans l'horloge de la deuxième carte à puce 130. La première donnée temporelle Tc1 obtenue à l'étape S320 correspond à la première donnée temporelle de référence Tr1 incrémentée par l'horloge de la deuxième carte à puce 130 pendant la première durée D1. L'étape S320 est mise en œuvre pendant une phase de fabrication de la deuxième carte à puce 130, ou pendant une phase d'utilisation de la deuxième carte à puce 130 au cours d'une transaction, dite première transaction, mise en œuvre au moyen de la deuxième carte à puce 130.

Ensuite, à l'étape S330, le serveur 150 détermine une dérive temporelle dt de l'horloge de la deuxième carte à puce 130.

Dans une étape S340, le serveur 150 détermine un comportement de la première carte à puce 100 à partir de ladite dérive temporelle dt déterminée à l'étape S330, c'est-à-dire à partir de la dérive temporelle dt de l'horloge 120 de la première carte à puce 100, ou à partir de la dérive temporelle dt de l'horloge de la deuxième carte à puce 130. Cette étape est typiquement mise en œuvre après la phase de fabrication de la première carte à puce 100, par exemple pendant la phase d'utilisation de cette première carte à puce 100.

Le comportement de la première carte à puce 100 peut être déterminé à partir de la dérive temporelle dt de la deuxième carte à puce 130 car la première carte à puce 100 et la deuxième carte à puce 130 font partie du même lot de fabrication. Ainsi, l'horloge 120 de la première carte à puce 100 comprend des similitudes avec l'horloge de la deuxième carte à puce 130, dues à des conditions de fabrication similaires ou identiques des horloges ou des cartes à puce. Aussi, il est possible de déterminer le comportement de plusieurs cartes à puce d'un même lot de fabrication en déterminant la dérive temporelle dt d'une ou deux cartes à puce de ce lot de fabrication.

Le comportement déterminé à l'étape S340 est par exemple une désynchronisation temporelle de la première carte à puce 100 par rapport au serveur 150.

Cette désynchronisation temporelle de la première carte à puce 100 est typiquement due à un manque de précision de l'horloge 120 de la carte à puce 100, par exemple lorsque la fréquence de résonnance de l'oscillateur 122 n'est pas égale à la fréquence de résonnance de l'horloge de référence utilisée par le serveur 150, typiquement lorsque la fréquence de résonnance de l'oscillateur 122 n'est pas égale à 32 kilohertz.

La dérive temporelle permet ainsi de quantifier la désynchronisation temporelle de la première carte à puce 100 avec le serveur 150.

Cette désynchronisation temporelle peut être déterminée par le serveur 150 dans le cadre d'une vérification d'un code de sécurité tel qu'un code de vérification dynamique.

Le principe de la vérification dynamique est expliqué en référence à la **figure 5.** Comme le montre cette figure, la première carte à puce 100 découpe le temps en périodes Pc1-Pcn successives. Les périodes Pc1-Pcn sont typiquement de durées théoriques égales, par exemple de trente minutes.

Le temps étant mesuré au niveau de la première carte à puce 100 par l'horloge 120, la première carte à puce 100 détermine le début de chaque nouvelle période Pc1-Pcn au moyen de l'horloge 120. La durée effective des périodes Pc1-Pcn telles que déterminées au niveau de la première carte à puce 100 dépend donc de l'horloge 120. La durée effective des périodes Pc1-Pcn peut ainsi différer de la durée théorique, par exemple telle que déterminée par l'horloge de référence, utilisée par le serveur 150.

En outre, le serveur 150 peut découper le temps en périodes Ps1-Psn successives, de durées théoriques égales aux durées théoriques des périodes Pc1-Pcn de la première carte à puce 100.

Le temps étant mesuré au niveau du serveur 150 par l'horloge de référence, la durée effective des périodes Ps1-Psn telles que déterminées au niveau du serveur 150 dépend donc de l'horloge de référence. Aussi, dans le cas où la durée théorique est déterminées par l'horloge de référence, la durée effective des périodes Ps1-Psn telles que déterminées au niveau du serveur 150 est égale à la durée théorique des périodes Ps1-Psn.

La première carte à puce 100 génère un nouveau code de vérification dynamique Cc1-Ccn au début de chaque nouvelle période Pc1-Pcn de la première carte à puce 100. L'instant de génération des codes de vérification dynamiques Cc1-Ccn dépend ainsi de l'horloge 120 de la première carte à puce 100.

Lors d'une transaction effectuée via la première carte à puce 100, dans des conditions normales d'utilisation de la première carte à puce 100, le code de vérification dynamique Ccj correspondant à la période Pcj en cours pour la première carte à puce 100, est envoyé au serveur 150. La première carte à puce 100 peut en outre envoyer le numéro de carte PAN, la date d'expiration de la carte et / ou le nom du porteur de carte.

Par conditions normales d'utilisation, on entend des conditions dans lesquelles les transactions sont permises, par opposition à des conditions anormales d'utilisation, où l'on souhaite bloquer la possibilité d'effectuer des transactions, par exemple après un vol ou une perte de la première carte à puce 100. Ainsi, dans des conditions anormales d'utilisation, les transactions sont rejetées quelques soit le résultat de la vérification des codes de vérification dynamiques.

Lorsque le serveur 150 reçoit le code de vérification dynamique Ccj de la première carte à puce 100, le serveur 150 génère un code de vérification dynamique correspondant à la période en cours au moment de la transaction pour le serveur 150, c'est-à-dire d'après l'horloge de référence. La première carte à puce 100 et le serveur 150 sont configurés de telle sorte que, pour tout entier i, le même code de vérification dynamique est associé à la période Pci par la première carte à puce 100, et indépendamment à la période Psi par le serveur 150.

Le serveur 150 détermine typiquement la période en cours d'après l'horloge de référence à partir de la date d'expiration de la première carte à puce 100. En variante, le serveur 150 détermine la période en cours d'après l'horloge de référence sans utiliser la date d'expiration.

Le serveur 150 compare le code de vérification dynamique généré par le serveur 150 au code de vérification dynamique reçu par le serveur 150.

Dans le cas, représenté en figure 5, où la première carte à puce 100 est synchronisée temporellement avec le serveur 150, la période en cours Pcj pour la première carte à puce 100 correspond à la période Psj en cours pour le serveur 150.

Aussi, dans des conditions normales d'utilisation de la première carte à puce 100, le code de vérification dynamique Csj généré par le serveur 150 correspond au code de vérification dynamique Ccj reçu par le serveur 150, et le serveur 150 peut alors authentifier la première carte à puce 100.

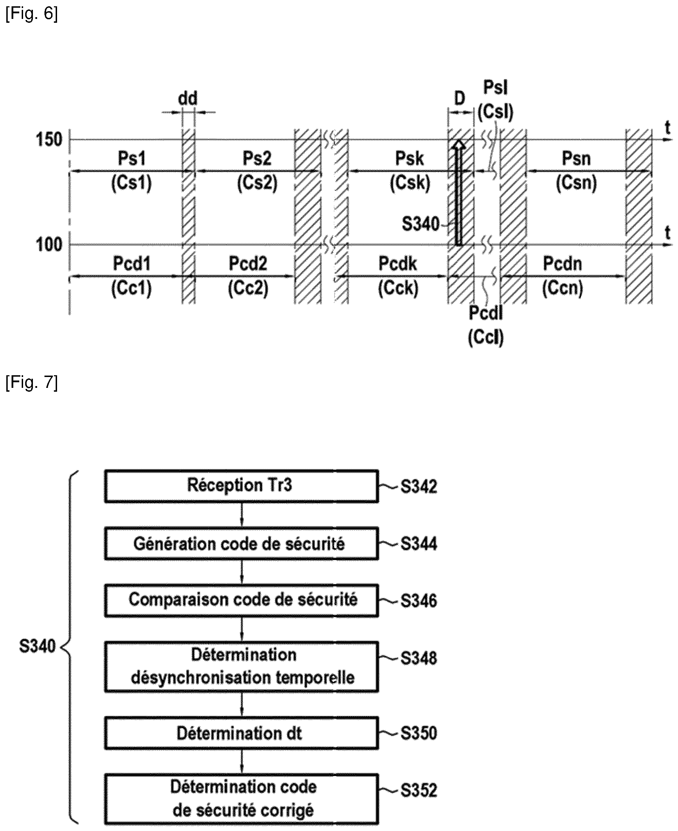

En référence à la **figure 6,** si la première carte à puce 100 n'est pas synchronisée temporellement avec le serveur 150, le code de vérification dynamique Ccl envoyé par la première carte à puce 100 peut ne pas correspondre au code de vérification dynamique Csk associé à la période Psk en cours déterminée par le serveur 150.

En effet, du fait de la désynchronisation temporelle, la durée effective de période de la première carte à puce 100 déterminée par l'horloge 120 diffère de la durée effective de période du serveur 150 déterminée par l'horloge de référence, par exemple d'une durée de désynchronisation dd. Cette différence peut provoquer, au fur et à mesure des périodes successives, un décalage D de plus en plus important entre la première carte à puce 100 et le serveur 150. Le décalage D est typiquement calculé en multipliant la durée de désynchronisation dd par le numéro de la période.

Par suite, à un instant donné pendant un décalage, la première carte à puce 100 peut considérer que la période en cours est la l-ème période Pcdl, alors que d'après le serveur 150, la période en cours est la k-ème période Psk, cette k-ième période Psk étant différente de la l-ème période Pcdl. La figure 6 représente des exemples de décalages D, par des zones hachurées.

L'étape S340 de détermination d'une désynchronisation temporelle est typiquement mise en œuvre au cours d'une transaction, dite deuxième transaction, mise en œuvre au moyen de la première carte à puce 100.

La deuxième transaction est typiquement une transaction utilisant un code de sécurité tel qu'un code de vérification dynamique. Ainsi, la deuxième transaction est typiquement une transaction bancaire en ligne. Une durée assez importante peut s'écouler entre la première transaction et la deuxième transaction.

Comme le montre la **figure 7,** l'étape S340 de détermination d'une désynchronisation temporelle comprend alors typiquement une sous étape S342 d'obtention d'une troisième donnée temporelle de référence Tr3 correspondant à un deuxième instant de lecture t3 d'une donnée temporelle de l'horloge Tc2 de la première carte à puce 100, dite deuxième donnée temporelle de l'horloge Tc2.

La deuxième donnée temporelle de l'horloge Tc2 correspond typiquement à la première donnée temporelle de référence Tr1 incrémentée par l'horloge 120 pendant une première durée D2 entre l'instant de réglage t1 et le deuxième instant de lecture t3 (voir figure 4). Plus précisément, la deuxième donnée temporelle de l'horloge Tc2 peut correspondre à la première donnée temporelle de référence Tr1 incrémentée par l'horloge 120 en fonction de la fréquence de résonnance de l'oscillateur 122 de l'horloge 120 pendant la deuxième durée D2.

La troisième donnée temporelle de référence Tr3 peut correspondre à la première donnée temporelle de référence Tr1 incrémentée par l'horloge de référence (par exemple en fonction de la fréquence de résonnance de l'oscillateur de l'horloge de l'horloge de référence), pendant la deuxième durée D2. La troisième donnée temporelle de référence Tr3 correspond ainsi typiquement à la date et l'heure courante, à au deuxième instant de lecture t3, de l'horloge de référence.

La troisième donnée temporelle de référence Tr3 est typiquement transmise par un terminal de transaction, dit deuxième terminal de transaction, avec lequel coopère la première carte à puce 100 pour réaliser la deuxième transaction. Le deuxième terminal est typiquement un terminal mobile, tel qu'un ordinateur portable, une tablette ou un téléphone.

Le deuxième terminal de transaction peut transmettre la troisième donnée temporelle de référence Tr3, par exemple en même temps qu'un code de sécurité correspondant à la période en cours pour la première carte à puce 100, cette période en cours comprenant la deuxième donnée temporelle de l'horloge Tc2. En variante, le serveur 150 reçoit un message du deuxième terminal de transaction ou de la première carte à puce 100, puis détermine la troisième donnée temporelle de référence Tr3 en consultant l'horloge de référence au moment de la réception du message.

Le serveur 150 peut alors générer, dans une sous étape S344, un code de sécurité correspondant à la période en cours au moment de la sous étape d'obtention S342 pour le serveur 150, c'est-à-dire d'après l'horloge de référence, puis comparer le code de sécurité reçu et le code de sécurité généré (sous étape S346). En variante, les sous étapes S344 et/ou S346 ne sont pas mises en œuvre. Par exemple, le serveur 150 peut générer le code de sécurité dans la sous étape S344, ce code de sécurité généré étant ensuite envoyés à un autre serveur qui effectue la comparaison avec le code de sécurité qu'il a reçu, par exemple du deuxième terminal de transaction, avant d'envoyer le résultat de la comparaison au serveur 150.

Dans une étape S348, le serveur 150 peut déterminer une désynchronisation temporelle au moyen du résultat de la comparaison et / ou de la dérive temporelle dt de la première carte à puce 100 ou d'une autre carte à puce du lot de fabrication de la première carte à puce 100, telle que la deuxième carte à puce 130.

Par exemple, une désynchronisation temporelle est déterminée par le serveur 150 si le code de sécurité reçu à la sous étape S342 ne correspond pas au code de sécurité généré à la sous étape S344 et si la dérive temporelle dt déterminée à l'étape S330 enregistrée est supérieure à un seuil donné de dérive. En variante, lorsque les sous étapes S344 et/ou S346 ne sont pas mises en œuvre, la désynchronisation temporelle peut être déterminée par le serveur 150 uniquement si la dérive temporelle dt déterminée à l'étape S330 enregistrée est supérieure à un seuil donné de dérive.

La deuxième donnée temporelle de l'horloge Tc2 peut en outre être envoyée, typiquement en même temps que la troisième donnée temporelle de référence Tr3 à la sous étape S342. Le serveur 150 peut alors mettre à jour ou déterminer la dérive temporelle dt de la première carte à puce 100 (sous étape S350), par exemple en calculant la dérive temporelle dt à partir de la formule suivante :

[Math. 2]

$$dt = \frac{Tc2 - Tr3}{Tr3 - Tr1}$$

ou en utilisant directement la dérive temporelle dt préalablement déterminée à l'étape S330.

Dans l'exemple de la figure 6, on considère que l'étape S340 est mise en œuvre pendant un décalage D, correspondant à la période Pcdl pour la première carte à puce 100 et la période Psk pour le serveur 150. Le code de sécurité envoyé par la première carte à puce 100 est alors le code Ccl, qui ne correspond pas au code de sécurité Csk généré par le serveur 150.

Le procédé peut ensuite comprendre une sous étape S352 de détermination d'un code de sécurité corrigé à partir de la dérive temporelle dt, cette sous étape S352 permettant de compenser la désynchronisation temporelle entre la première carte à puce 100 et le serveur 150.

Le code de sécurité corrigé est déterminé en fonction de la troisième donnée temporelle de référence Tr3, de la première donnée temporelle de référence Tr1 et de la dérive temporelle dt.

Plus précisément, un instant tc associé au code de sécurité corrigé est calculé par le serveur 150, à partir de la formule suivante :

[Math. 3]

$$tc = Tr3 + (Tr3 - Tr1)*dt$$

L'instant tc correspond ainsi à la deuxième donnée temporelle de l'horloge Tc2.

Le serveur 150 détermine ensuite quelle période déterminée par le serveur 150 comprend l'instant tc, puis génère le code de sécurité correspondant à cette période, ce code de sécurité étant le code de sécurité corrigé.

Dans l'exemple de la figure 6, le code de sécurité corrigé correspond au code Csl, correspondant à la période Psl du serveur 150.

Le serveur 150 peut ensuite comparer de code de sécurité corrigé avec le code de sécurité reçu par le serveur 150 à l'étape S340.

Si le code de sécurité corrigé correspond au code de sécurité reçu à l'étape S340, la première carte à puce 100 peut être authentifiée par le serveur 150. La deuxième transaction peut alors être acceptée par le serveur 150.

Si au contraire le code de sécurité corrigé ne correspond pas au code de sécurité reçu à l'étape S340, la première carte à puce 100 peut ne pas être authentifiée. La deuxième transaction peut alors ne pas être acceptée par le serveur 150. Le serveur 150 peut en outre suspecter une potentielle attaque informatique au niveau de la première carte à puce 100.

En variante, si le code de sécurité corrigé ne correspond pas au code de sécurité reçu à l'étape S340, le serveur 150 détermine une ou plusieurs périodes suivant la période comprenant l'instant tc et / ou une ou plusieurs périodes précédant la période comprenant l'instant tc, puis génère le code de sécurité correspondant à cette / ces périodes, avant de le comparer au code de sécurité reçu. Si le code de sécurité correspondant à une période suivant ou précédent la période comprenant l'instant tc correspond au code de sécurité reçu, la deuxième transaction peut être acceptée par le serveur 150. Le nombre de période suivant et / ou le nombre de période précédent la période tc sont configurables côté serveur 150, pour la première carte à puce 100 ou pour le lot de fabrication de la première carte à puce 100. Ainsi, de potentiels délais de transmission peuvent être pris en compte par le serveur 150. Le serveur 150 peut aussi suspecter une potentielle attaque informatique au niveau de la première carte à puce 100.

En variante, le serveur 150 ne compare pas le code de sécurité corrigé avec le code de sécurité reçu mais envoie le code de sécurité corrigé à un autre serveur qui effectue la comparaison avec le code de sécurité qu'il a reçu, par exemple du deuxième terminal de transaction, afin d'authentifier la première carte et d'accepter ou non la deuxième transaction.

En variante, le comportement déterminé à l'étape S340 peut être une réaction de la première carte à puce 100 suite à une attaque informatique au niveau de la première carte à puce 100.

Dans une autre variante, le comportement déterminé à l'étape S340 est une durée de fonctionnement de la première carte à puce 100.

En effet, il est possible de déterminer l'état de la première carte à puce 100 à partir de variations de vitesse à laquelle l'horloge 120 dérive, et il est ainsi possible de déterminer la durée de vie restante de la première carte à puce 100.

Dans un exemple, il est possible de déterminer qu'un composant de la première carte à puce 100, tel que l'oscillateur à quartz, est défectueux. En effet, dans une telle situation, l'horloge 120 cesse d'utiliser l'oscillateur à quartz, et utilise à la place le circuit oscillant comprenant une résistance et une capacité.

A cette fin, le serveur 150 détermine, pour une ou plusieurs cartes à puce 100, 130 du même lot de fabrication, typiquement la première carte à puce 100 et / ou la deuxième carte à puce 130 :

- un instant de modification de la vitesse de dérive, cette modification pouvant être causée par une casse de l'oscillateur à quartz,

- un instant à partir duquel la carte à puce 100, 130 n'est plus fonctionnelle, par exemple lorsque le code de sécurité n'est plus modifié en fonction du temps, ou lorsque le la dérive temporelle est supérieure à un seuil donné.

Ces données peuvent ensuite être utilisées pour déterminer l'état de cartes à puce du même lot de fabrication.

Dans encore une autre variante, le comportement déterminé est une durée de fonctionnement d'une batterie de la première carte à puce 100.

Dans ces variantes, l'étape S340 de détermination d'un comportement comprend typiquement une obtention d'une deuxième donnée temporelle de l'horloge Tc2 de la première carte à puce 100 et d'une troisième donnée temporelle de référence Tr3 correspondant à un instant de lecture t3 de la deuxième donnée temporelle de l'horloge Tc2, au cours d'une deuxième transaction mise en œuvre au moyen de ladite première carte à puce 100. La deuxième transaction est typiquement une transaction pour laquelle aucun code de sécurité n'est envoyé (par exemple une transaction bancaire par l'intermédiaire de la puce électronique 216, sans contact ou avec contact). En variante, la deuxième transaction peut être une transaction utilisant un code de vérification dynamique.

Le comportement est alors déterminé en fonction de la troisième donnée temporelle de référence Tr3. Plus précisément, le serveur 150 détermine une nouvelle dérive temporelle de la première carte à puce 100 à partir de la formule suivante :

[Math. 4]

$$dt = \frac{Tc2 - Tr3}{Tr3 - Tr1}$$

Ensuite, le serveur 150 peut déterminer le comportement en fonction de cette nouvelle dérive ou comparer cette nouvelle dérive temporelle avec la dérive temporelle calculée à l'étape S330, puis déterminer le comportement en fonction de cette comparaison.

En effet, il est possible de déduire que la batterie arrive en fin de vie à partir des variations de la vitesse à laquelle dérive l'horloge, la dérive étant par exemple accentuée par la fourniture d'un niveau faible d'énergie.

L'étape S340 du procédé de la figure 3 peut être réitérée de sorte à déterminer le comportement d'une autre carte du lot de fabrication de la première carte à puce 100, telle que la deuxième carte à puce 130 de la figure 1, ou pour déterminer le comportement de la première carte à puce 100 à un autre instant.

La **figure 8** représente un procédé de détermination d'un comportement d'une ou plusieurs cartes à puce, conforme à un exemple de mode de réalisation de l'invention. Les éléments communs ou analogues des figures 3 et 8 portent les mêmes signes de référence.

A un instant de réglage t1, une première donnée temporelle de référence Tr1 peut être enregistrée dans l'horloge 120 de la première carte à puce 100, typiquement dans les registres 125 temporels de l'horloge 120. Cet enregistrement peut être effectué par un terminal de personnalisation, par exemple pendant une phase de fabrication de la carte à puce 100.

La première donnée temporelle de référence Tr1 correspond typiquement à la date et l'heure courante, à l'instant de réglage t1, d'une horloge de référence, telle que l'horloge atomique ou l'horloge du terminal personnalisation.

La première donnée temporelle de référence Tr1 est incrémentée par l'horloge 120, après son enregistrement dans l'horloge 120.

Suite à cet enregistrement, le serveur 150 obtient, dans une étape S810, la première donnée temporelle de référence Tr1 correspondant à l'instant de réglage t1. Cette première donnée temporelle de référence Tr1 est typiquement transmise par le terminal de personnalisation ayant enregistré cette donnée dans l'horloge 120. En variante, le serveur 150 reçoit un message du terminal de personnalisation ou de la première carte à puce 100, puis détermine la première donnée temporelle de référence Tr1 en consultant l'horloge de référence au moment de la réception du message.

Ensuite, dans une étape S820, le serveur 150 peut obtenir une deuxième donnée temporelle de référence Tr2, correspondant à un instant de lecture t2 d'une première donnée temporelle Tc1 de l'horloge 120 de la première carte à puce 100.

Au cours de cette étape S820, la première donnée temporelle de l'horloge Tc1 peut en outre être obtenue par le serveur 150.

La première donnée temporelle de l'horloge Tc1 correspond typiquement à la première donnée temporelle de référence Tr1 incrémentée par l'horloge 120 pendant une première durée D1 entre l'instant de réglage t1 et l'instant de lecture t2. Plus précisément, la première donnée temporelle de l'horloge Tc1 peut correspondre à la première donnée temporelle de référence Tr1 incrémentée par l'horloge 120 en fonction de la fréquence de résonnance de l'oscillateur 122 de l'horloge 120 pendant la première durée D1.

La deuxième donnée temporelle de référence Tr2 peut correspondre à la première donnée temporelle de référence Tr1 incrémentée par l'horloge de référence (par exemple en fonction de la fréquence de résonnance de l'oscillateur de l'horloge de l'horloge de référence), pendant la première durée D1. La deuxième donnée temporelle de référence Tr2 correspond ainsi typiquement à la date et l'heure courante, à l'instant de lecture, de l'horloge de référence.

La deuxième donnée temporelle de référence Tr2 est typiquement obtenue pendant une phase d'utilisation de la première carte à puce 100, au cours d'une transaction, dite troisième transaction, mise en œuvre au moyen de la première carte à puce 100. Un terminal de transaction, dit troisième terminal de transaction, peut alors lire la première donnée temporelle de l'horloge Tc1, puis transmettre la deuxième donnée temporelle de référence Tr2 et la première donnée temporelle de l'horloge Tc1 au serveur 150, par exemple dans un champ personnalisé d'une requête d'authentification.

La troisième transaction est typiquement une transaction utilisant un code de vérification dynamique.

En variante, le serveur 150 reçoit un message du terminal ou de la première carte à puce 100, puis détermine la deuxième donnée temporelle de référence Tr2 en consultant l'horloge de référence au moment de la réception du message.

Dans une étape S830, le serveur 150 peut déterminer une dérive temporelle dt associée à la première carte à puce 100. La dérive temporelle dt est typiquement la dérive temporelle de l'horloge 120 de la première carte à puce 100, en fonction de la première donnée temporelle de référence Tr1, et de la deuxième donnée temporelle de référence Tr2.

Cette étape S830 peut être mise en œuvre au cours de la troisième transaction, mise en œuvre au moyen de la première carte à puce 100.

Le serveur 150 reçoit (sous étape S832) un code de sécurité correspondant à la période en cours pour la première carte à puce 100, cette période en cours comprenant la première donnée temporelle de l'horloge Tc1. Le serveur 150 génère ensuite (sous étape S834) un code de sécurité correspondant à la période en cours pour le serveur 150 au moment de la sous étape de réception S832, d'après l'horloge de référence, avant de comparer (sous étape S836) le code de sécurité reçu et le code de sécurité généré.

En variante, le serveur 150 ne compare pas le code de sécurité généré avec le code de sécurité reçu mais envoie le code de sécurité généré à un autre serveur, qui effectue la comparaison avec le code de sécurité qu'il a reçu, par exemple du troisième terminal de transaction, puis envoie le résultat de la comparaison au serveur 150.

Si le code de sécurité reçu ne correspond pas au (ou est différent du) code de sécurité généré, le serveur 150 définit la dérive temporelle dt à une valeur donnée (sous étape S838).

En variante, lorsque le serveur 150 reçoit le code de sécurité envoyé par la première carte à puce 100, il définit directement la dérive temporelle dt à la valeur donnée, sans générer de code de sécurité.

La valeur donnée est typiquement calculée en fonction d'un historique comprenant une ou plusieurs dérives temporelles précédemment déterminées, chaque dérive temporelle pouvant être une dérive temporelle de l'horloge 120 de la première carte à puce 100, ou une dérive temporelle de l'horloge d'une autre carte à puce du même lot de fabrication, telle que la deuxième carte à puce 130.

La dérive temporelle dt peut en outre être déterminée en fonction d'une ou plusieurs informations sur la fabrication de la première carte à puce 100, stockées dans le serveur 150. En variante, ces informations sur la fabrication sont stockées dans un autre serveur, tel qu'un serveur utilisé lors de la fabrication de la première carte à puce 100. Le serveur 150 peut alors communiquer avec cet autre serveur pour obtenir ces informations sur la fabrication.

Chaque information sur la fabrication peut être une information sur un composant de la carte (typiquement l'horloge 120), une information sur les conditions de fabrication, ou une information sur le stockage de la carte.

L'information sur un composant de la carte peut être par exemple un nom, un numéro de série, un fabriquant, un numéro de lot de fabrication, ou une date de fabrication du composant.

L'information sur les conditions de fabrication peut être un outil utilisé pour la fabrication, une date de fabrication, un horaire de fabrication, ou une usine de fabrication de la carte.

L'information sur le stockage peut être le lieu de stockage, la durée de stockage, la température de stockage, etc.

Le serveur 150 peut en effet utiliser ces informations afin déterminer une potentielle modification de la dérive temporelle au cours de la vie de la carte à puce. La détermination de cette potentielle modification peut se baser sur une dérive temporelle calculée pour une autre carte du même lot de fabrication. En effet, les informations sur la fabrication sont typiquement similaires pour chaque carte à puce d'un même lot de fabrication.

La dérive temporelle dt peut en outre être déterminée en fonction d'une ou plusieurs informations sur l'utilisation de la première carte à puce 100, par exemple stockées dans le serveur 150, telles que le principal pays dans lequel la carte est utilisée, le type d'utilisation, le type d'utilisateur, etc. Le serveur 150 peut là encore utiliser de telles informations pour déterminer une potentielle modification de la dérive temporelle au cours de la vie de la carte à puce.

La valeur donnée est typiquement de 25 secondes par jour.

Ensuite, dans une étape S840, le serveur 150 détermine un comportement de la première carte à puce 100 à partir de ladite dérive temporelle dt déterminée à l'étape S830.

Le comportement de la carte à puce déterminé est typiquement une désynchronisation temporelle de la première carte à puce 100 par rapport au serveur 150.

L'étape de détermination S840 d'un comportement de la première carte à puce 100 comprend alors la détermination d'un premier code de sécurité corrigé à partir de la dérive temporelle dt (sous étape S842).

La dérive temporelle dt est par exemple utilisée afin de déterminer la période pour la première carte à puce 100 associée au code de sécurité reçu à la sous étape S832. Puis par exemple, on chiffre avec une clé cryptographique le numéro de la fenêtre. (Ce numéro peut consister en une valeur incrémentée à chaque nouvelle fenêtre.)

Un exemple d'algorithme utilisé pour calculer le code de sécurité est spécifié dans RFC 6238 TOTP.

Ensuite, le premier code de sécurité corrigé est comparé au code de sécurité reçu par le serveur 150 à la sous étape S832 (sous étape S844).

Si le premier code de sécurité corrigé correspond au code de sécurité reçu, la première carte à puce 100 peut être authentifiée par le serveur 150. La troisième transaction peut alors être acceptée par le serveur 150, et la dérive temporelle calculée à la sous étape S838 peut être enregistrée dans l'historique de dérives temporelles.

Si au contraire le premier code de sécurité corrigé ne correspond pas au code de sécurité reçu, la première carte à puce 100 peut ne pas être authentifiée. La troisième transaction peut alors ne pas être acceptée par le serveur 150. Le serveur 150 peut alors suspecter une potentielle attaque informatique au niveau de la première carte à puce 100.

En variante, si le premier code de sécurité corrigé ne correspond pas au code de sécurité reçu, le serveur 150 peut déterminer un deuxième code de sécurité, correspondant à une période suivant ou une période précédant la période correspondant au premier code de sécurité corrigé (sous étape S846).

Ensuite, le deuxième code de sécurité corrigé est comparé au code de sécurité reçu par le serveur 150 à la sous étape S832 (sous étape S848).

Si le deuxième code de sécurité corrigé correspond au code de sécurité reçu, la première carte à puce 100 peut être authentifiée par le serveur 150. La troisième transaction peut alors être acceptée par le serveur 150.

La dérive temporelle dt de la première carte à puce 100 peut alors être modifiée par le serveur 150 (sous étape S850), typiquement en fonction de la période correspondant au deuxième code de sécurité, puis peut être enregistrée dans l'historique de dérives temporelles.

La dérive temporelle modifiée dm peut être calculée à partir de la formule suivante :

[Math. 5]

$$dm = \frac{T_{2T} - T_{1T}}{Tr2 - Tr1}$$

Où $T_{1T}$ est une donnée temporelle correspondant à l'instant du début de la période comprenant l'instant Tr2 et $T_{2T}$ est une donnée temporelle correspondant à l'instant du début de la période qui correspond au deuxième code de sécurité.

Si au contraire le deuxième code de sécurité corrigé ne correspond pas au code de sécurité reçu, la première carte à puce 100 peut ne pas être authentifiée.

La troisième transaction peut alors ne pas être acceptée par le serveur 150. Le serveur 150 peut alors suspecter une potentielle attaque informatique au niveau de la première carte à puce 100.

En variante, les sous étapes S846, S848, S850 peuvent être réitérées, pour d'autres périodes. Cette variante est typiquement mise en œuvre lorsque la troisième transaction est la première transaction réalisée au moyen de la première carte à puce 100, cette première transaction étant typiquement une transaction blanche.

En variante, le serveur 150 ne compare pas le premier code de sécurité corrigé et/ou le deuxième code de sécurité corrigé avec le code de sécurité reçu mais envoie le premier code de sécurité corrigé et/ou le deuxième code de sécurité corrigé à un autre serveur qui effectue la comparaison avec le code de sécurité qu'il a reçu, par exemple du troisième terminal de transaction, afin d'authentifier la première carte à puce et d'accepter ou non la troisième transaction.

Le procédé de la figure 8 peut être combiné au procédé de la figure 3. Dans un exemple, les étapes S830 et S840 de la figure 8 peuvent être mises en œuvre après l'étape S340, typiquement lors d'une autre transaction. Dans un autre exemple, l'étape S840 de la figure 8 peut être mise en œuvre après l'étape S330.

## Revendications

1. Procédé de détermination d'un comportement d'une carte à puce (100), dite première carte à puce (100), mis en œuvre par un serveur (150), comprenant les étapes suivantes :

   - obtention (S810) d'une première donnée temporelle de référence (Tr1) correspondant à un instant de réglage (t1) d'une horloge (120) de carte à puce,
   - obtention (S820) d'une deuxième donnée temporelle de référence (Tr2) correspondant à un instant de lecture (t2) d'une première donnée temporelle de ladite horloge (Tc1), ladite deuxième donnée temporelle de référence (Tr2) correspondant à la première donnée temporelle de référence (Tr1) incrémentée par une horloge de référence pendant une première durée (D1) entre l'instant de réglage (t1) et le premier instant de lecture (t2), et ladite première donnée temporelle de ladite horloge (Tc1) correspondant à la première donnée temporelle de référence (Tr1) incrémentée par l'horloge (120) de carte à puce pendant la première durée (D1), ladite deuxième donnée temporelle de référence (Tr2) étant reçue pendant une phase d'utilisation de la première carte à puce (100), au cours d'une transaction, dite troisième transaction, mise en œuvre au moyen de la première carte à puce,

   - détermination (S830) d'une dérive temporelle (dt) associée à la première carte à puce (100) en fonction de ladite première donnée temporelle de référence (Tr1) et de ladite deuxième donnée temporelle de référence (Tr2), la détermination (S830) de la dérive temporelle (dt) comprenant une définition (S838) de la dérive temporelle (dt) à une valeur donnée
   - détermination (S840) d'un comportement de la première carte à puce (100) à partir de ladite dérive temporelle (dt), dans lequel le comportement déterminé est une désynchronisation temporelle de la première carte à puce (100) par rapport au serveur (150),

   l'étape de détermination (S830) d'un comportement de la première carte à puce (100) comprenant :

   - une détermination (S842) d'un code de sécurité corrigé à partir de la dérive temporelle (dt),
   - une comparaison (S844) du code de sécurité corrigé avec un code de sécurité reçu, ledit code de sécurité reçu ayant été émis par la première carte à puce (100), et la dérive temporelle (dt) étant modifiée (S850) si le code de sécurité corrigé déterminé est différent du code de sécurité reçu.

2. Procédé selon la revendication 1, dans lequel la première carte à puce (100) comprend ladite horloge (120) de carte à puce.

3. Procédé selon la revendication 1, dans lequel une deuxième carte à puce (130) comprend ladite horloge (120) de carte à puce, la première carte à puce (100) et la deuxième carte à puce (130) faisant parties du même lot de fabrication de cartes à puce.

4. Procédé selon l'une quelconque des revendications 1 à 3, dans lequel le serveur (150) est un serveur d'authentification, apte à authentifier la première carte à puce (100).

5. Procédé selon l'une quelconque des revendications 1 à 4, dans lequel la dérive temporelle (dt) est en outre déterminée en fonction d'une information sur la fabrication ou l'utilisation de la première carte à puce (100), stockée dans le serveur (150).

6. Procédé selon la revendication 3, dans lequel ladite deuxième donnée temporelle de référence (Tr2) est reçue :

   - pendant une phase de fabrication de la deuxième carte à puce (130), ou
   - pendant une phase d'utilisation de la deuxième carte à puce (130), au cours d'une première transaction mise en œuvre au moyen de ladite deuxième carte à puce (130),

ladite première donnée temporelle de l'horloge (Tc1) étant en outre reçue.

7. Procédé selon l'une quelconque des revendications 1 à 5, dans lequel ladite deuxième donnée temporelle de référence (Tr2) est reçue :

- pendant une phase de fabrication de la première carte à puce (100), ou
- pendant une phase d'utilisation de la première carte à puce (100), au cours d'une première transaction mise en œuvre au moyen de ladite première carte à puce (100),

ladite première donnée temporelle de l'horloge (Tc1) étant en outre reçue.

8. Procédé selon l'une quelconque des revendications 1 à 7, dans lequel l'étape (S340) de détermination d'un comportement comprend une obtention (S342) d'une donnée temporelle de l'horloge (Tc2) de la première carte à puce (100), dite deuxième donnée temporelle de l'horloge (Tc2) et d'une troisième donnée temporelle de référence (Tr3) correspondant à un instant de lecture (t3) de la deuxième donnée temporelle de l'horloge (Tc2), au cours d'une deuxième transaction mise en œuvre au moyen de ladite première carte à puce (100),
dans lequel le comportement déterminé est déterminé en fonction de la troisième donnée temporelle de référence (Tr3).

9. Procédé selon l'une quelconque des revendications 1 à 8, comprenant en outre une authentification de la première carte à puce (100), en fonction du résultat de la comparaison du code de sécurité déterminé avec le code de sécurité reçu.

10. Procédé selon l'une quelconque des revendications 1 à 9, dans lequel la valeur donnée est déterminée en fonction d'une dérive temporelle (dt) précédemment déterminée.

11. Procédé selon l'une quelconque des revendications 1 à 10 en combinaison avec la revendication 8, dans lequel le code sécurité corrigé est déterminé (S352) à partir de la dérive temporelle (dt) dont une valeur est déterminée lors de l'étape de détermination (S330) d'une dérive temporelle (dt), ou dont une valeur est calculée à partir de la formule

$$dt = \frac{Tc2 - Tr3}{Tr3 - Tr1}.$$

12. Serveur (150) apte à mettre en œuvre un procédé selon l'une quelconque des revendications 1 à 11.

13. Programme d'ordinateur (P1) comportant des instructions pour l'exécution des étapes du procédé selon l'une quelconque des revendications 1 à 11 lorsque ledit programme (P1) est exécuté par un ordinateur.

14. Support d'enregistrement lisible par un ordinateur sur lequel est enregistré un programme d'ordinateur (P1) comprenant des instructions pour l'exécution des étapes du procédé selon l'une quelconque des revendications 1 à 11.

**Patentansprüche**

1. Verfahren zur Bestimmung eines Verhaltens einer Chipkarte (100), erste Chipkarte (100) genannt, das von einem Server (150) implementiert wird, umfassend die folgenden Schritte:

- Erhalten (S810) eines ersten zeitlichen Referenzdatenwerts (Tr1), der einem Einstellungszeitpunkt (t1) eines Chipkartentaktgebers (120) entspricht,
- Erhalten (S820) eines zweiten zeitlichen Referenzdatenwerts (Tr2), der einem Lesezeitpunkt (t2) eines ersten zeitlichen Datenwerts des Taktgebers (Tc1) entspricht, wobei der zweite zeitliche Referenzdatenwert (Tr2) dem ersten zeitlichen Referenzdatenwert (Tr1) entspricht, der durch einen Referenztaktgeber während einer ersten Dauer (D1) zwischen dem Einstellungszeitpunkt (t1) und dem ersten Lesezeitpunkt (t2) inkrementiert wurde, und wobei der erste zeitliche Datenwert des Taktgebers (Tc1) dem ersten zeitlichen Referenzdatenwert (Tr1) entspricht, der durch den Chipkartentaktgeber (120) während der ersten Dauer (D1) inkrementiert wurde, wobei der zweite zeitliche Referenzdatenwert (Tr2) während einer Verwendungsphase der ersten Chipkarte (100), im Laufe einer Transaktion, dritte Transaktion genannt, empfangen wird, die mittels der ersten Chipkarte implementiert wird,
- Bestimmen (S830) einer zeitlichen Ableitung (dt), die der ersten Chipkarte (100) zugeordnet ist, in Abhängigkeit von dem ersten zeitlichen Referenzdatenwert (Tr1) und von dem zweiten zeitlichen Referenzdatenwert (Tr2), wobei das Bestimmen (S830) der zeitlichen Ableitung (dt) eine Festlegung (S838) der zeitlichen Ableitung (dt) auf einen gegebenen Wert umfasst
- Bestimmen (S840) eines Verhaltens der ersten Chipkarte (100) ausgehend von der zeitlichen Ableitung (dt), wobei das bestimmte Verhalten eine zeitliche Desynchronisation der ersten Chipkarte (100) in Bezug auf den Server (150) ist,

wobei der Schritt des Bestimmens (S830) eines Verhaltens der ersten Chipkarte (100) umfasst:

- ein Bestimmen (S842) eines ausgehend von der zeitlichen Ableitung (dt) korrigierten Sicherheitscodes,
- ein Vergleichen (S844) des korrigierten Sicherheitscodes mit einem empfangenen Sicherheitscode, wobei der empfangene Sicherheitscode von der ersten Chipkarte (100) gesendet worden ist, und wobei die zeitliche Ableitung (dt) geändert wird (S850), wenn der bestimmte korrigierte Sicherheitscode von dem empfangenen Sicherheitscode verschieden ist.

2. Verfahren nach Anspruch 1, wobei die erste Chipkarte (100) den Chipkartentaktgeber (120) umfasst.

3. Verfahren nach Anspruch 1, wobei eine zweite Chipkarte (130) den Chipkartentaktgeber (120) umfasst, wobei die erste Chipkarte (100) und die zweite Chipkarte (130) zu derselben Chipkartenfertigungscharge gehören.

4. Verfahren nach einem der Ansprüche 1 bis 3, wobei der Server (150) ein Authentifizierungsserver ist, der geeignet ist, die erste Chipkarte (100) zu authentifizieren.

5. Verfahren nach einem der Ansprüche 1 bis 4, wobei die zeitliche Ableitung (dt) ferner in Abhängigkeit von einer Information über die Fertigung oder die Verwendung der ersten Chipkarte (100) bestimmt wird, die in dem Server (150) gespeichert ist.

6. Verfahren nach Anspruch 3, wobei der zweite zeitliche Referenzdatenwert (Tr2) empfangen wird:

- während einer Fertigungsphase der zweiten Chipkarte (130),
oder
- während einer Verwendungsphase der zweiten Chipkarte (130), im Laufe einer ersten Transaktion, die mittels der zweiten Chipkarte (130) implementiert wird, wobei ferner der erste zeitliche Datenwert des Taktgebers (Tc1) empfangen wird.

7. Verfahren nach einem der Ansprüche 1 bis 5, wobei der zweite zeitliche Referenzdatenwert (Tr2) empfangen wird:

- während einer Fertigungsphase der ersten Chipkarte (100),
oder
- während einer Verwendungsphase der ersten Chipkarte (100), im Laufe einer ersten Transaktion, die mittels der ersten Chipkarte (100) implementiert wird,

wobei ferner der erste zeitliche Datenwert des Taktgebers (Tc1) empfangen wird.

8. Verfahren nach einem der Ansprüche 1 bis 7, wobei der Schritt (S340) des Bestimmens eines Verhaltens ein Erhalten (S342) eines zeitlichen Datenwerts des Taktgebers (Tc2) der ersten Chipkarte (100), zweiter zeitlicher Datenwert des Taktgebers (Tc2) genannt, und eines dritten zeitlichen Referenzdatenwerts (Tr3), der einem Lesezeitpunkt (t3) des zweiten zeitlichen Datenwerts des Taktgebers (Tc2) entspricht, im Laufe einer zweiten Transaktion, die mittels der ersten Chipkarte (100) implementiert wird, umfasst, wobei das bestimmte Verhalten in Abhängigkeit von dem dritten zeitlichen Referenzdatenwert (Tr3) bestimmt wird.

9. Verfahren nach einem der Ansprüche 1 bis 8, umfassend ferner eine Authentifizierung der ersten Chipkarte (100) in Abhängigkeit von dem Ergebnis des Vergleichs des bestimmten Sicherheitscodes mit dem empfangenen Sicherheitscode.

10. Verfahren nach einem der Ansprüche 1 bis 9, wobei der gegebene Wert in Abhängigkeit von einer zuvor bestimmten zeitlichen Ableitung (dt) bestimmt wird.

11. Verfahren nach einem der Ansprüche 1 bis 10 in Kombination mit Anspruch 8, wobei der korrigierte Sicherheitscode ausgehend von der zeitlichen Ableitung (dt) bestimmt wird (S352), von der ein Wert bei dem Schritt des Bestimmens (S330) einer zeitlichen Ableitung (dt) bestimmt wird oder von der ein Wert ausgehend von der Formel $dt = \dfrac{Tc2 - Tr3}{Tr3 - Tr1}$ berechnet wird.

12. Server (150), der geeignet ist, ein Verfahren nach einem der Ansprüche 1 bis 11 zu implementieren.

13. Computerprogramm (P1), das Anweisungen beinhaltet, die bei der Ausführung des Programms (P1) durch einen Computer die Schritte eines Verfahrens nach einem der Ansprüche 1 bis 11 ausführen.

14. Computerlesbares Speichermedium, auf dem ein Computerprogramm (P1) gespeichert ist, das Anweisungen zum Ausführen der Schritte des Verfahrens nach einem der Ansprüche 1 bis 11 umfasst.

**Claims**

1. Method for determining a behaviour of a smart card (100), called the first smart card (100), performed by a server (150), comprising the following steps:

- obtaining (S810) a first reference time datum (Tr1) corresponding to a time of adjustment (t1) of a smart card clock (120),
- obtaining (S820) a second reference time datum (Tr2) corresponding to a time of reading (t2) of a first time datum of said clock (Tc1), said second reference time datum (Tr2) corresponding to the first reference time datum (Tr1) incremented by a reference clock during a first period (D1) between the time of adjustment (t1) and the first time of reading (t2), and said first time datum of said clock (Tc1) corresponding to the first reference time datum (Tr1) incremented by the smart card clock (120) during the first period (D1), said second reference time datum (Tr2) being received during a phase of use of the first smart card (100), in the course of a transaction, called the third transaction, performed by means of the first smart card,
- determining (S830) a time drift (dt) associated with the first smart card (100) on the basis of said first reference time datum (Tr1) and said second reference time datum (Tr2), the determination (S830) of the time drift (dt) comprising setting (S838) the time drift (dt) to a given value,
- determining (S840) a behaviour of the first smart card (100) from said time drift (dt), wherein the determined behaviour is a time desynchronization of the first smart card (100) with respect to the server (150), the step of determining (S830) a behaviour of the first smart card (100) comprising:
- determining (S842) a corrected security code from the time drift (dt),
- comparing (S844) the corrected security code with a received security code, said received security code having been transmitted by the first smart card (100), and the time drift (dt) being changed (S850) if the determined corrected security code is different from the received security code.

2. Method according to Claim 1, wherein the first smart card (100) comprises said smart card clock (120).

3. Method according to Claim 1, wherein a second smart card (130) comprises said smart card clock (120), the first smart card (100) and the second smart card (130) being part of the same smart card manufacturing batch.

4. Method according to any one of Claims 1 to 3, wherein the server (150) is an authentication server capable of authenticating the first smart card (100).

5. Method according to any one of Claims 1 to 4, wherein the time drift (dt) is also determined on the basis of information on the manufacture or use of the first smart card (100), stored in the server (150).

6. Method according to Claim 3, wherein said second reference time datum (Tr2) is received:

- during a manufacturing phase of the second smart card (130),
or
- during a phase of use of the second smart card (130) in the course of a first transaction performed by means of said second smart card (130),

said first time datum of the clock (Tc1) also being received.

7. Method according to any one of Claims 1 to 5, wherein said second reference time datum (Tr2) is received:

- during a manufacturing phase of the first smart card (100),
or
- during a phase of use of the first smart card (100) in the course of a first transaction performed by means of said first smart card (100),

said first time datum of the clock (Tc1) also being received.

8. Method according to any one of Claims 1 to 7, wherein the step (S340) of determining a behaviour comprises obtaining (S342) a time datum of the clock (Tc2) of the first smart card (100), called the second time datum of the clock (Tc2), and a third reference time datum (Tr3) corresponding to a time of reading (t3) of the second time datum of the clock (Tc2), in the course of a second transaction performed by means of said first smart card (100), wherein the determined behaviour is determined on the basis of the third reference time datum (Tr3).

9. Method according to any one of Claims 1 to 8, also comprising authenticating the first smart card (100) on the basis of the result of the comparison of the determined security code with the received security code.

10. Method according to any one of Claims 1 to 9, wherein the given value is determined on the basis of a previously determined time drift (dt).

11. Method according to any one of Claims 1 to 10 in combination with Claim 8, wherein the corrected security code is determined (S352) from the time drift (dt) for which a value is determined in the step of determining (S330) a time drift (dt), or for which a value is calculated from the formula

$$dt = \frac{Tc2 - Tr3}{Tr3 - Tr1} \cdot$$

**12.** Server (150) capable of performing a method according to any one of Claims 1 to 11.

**13.** Computer program (P1) comprising instructions for carrying out the steps of the method according to any one of Claims 1 to 11 when said program (P1) is executed by a computer.

**14.** Computer-readable recording medium on which is recorded a computer program (P1) comprising instructions for carrying out the steps of the method according to any one of Claims 1 to 11.

[Fig. 1]

[Fig. 2]

[Fig. 3]

```
┌─────────────────────────────────────┐
│           Réception Tr1             │ ～ S310
└─────────────────────────────────────┘
                  │
                  ▼
┌─────────────────────────────────────┐
│           Réception Tr2             │ ～ S320
└─────────────────────────────────────┘
                  │
                  ▼
┌─────────────────────────────────────┐
│          Détermination dt           │ ～ S330
└─────────────────────────────────────┘
                  │
                  ▼
┌─────────────────────────────────────┐
│     Détermination comportement      │ ～ S340
└─────────────────────────────────────┘
```

[Fig. 4]

[Fig. 5]

[Fig. 6]

[Fig. 7]

| Réception Tr3 | ~S342 |

| Génération code de sécurité | ~S344 |

| Comparaison code de sécurité | ~S346 |

| Détermination désynchronisation temporelle | ~S348 |

| Détermination dt | ~S350 |

| Détermination code de sécurité corrigé | ~S352 |

S340

[Fig. 8]

```
┌──────────────────────────────┐
│        Réception Tr1          │─── S810
└──────────────────────────────┘
               │
               ▼
┌──────────────────────────────┐
│        Réception Tr2          │─── S820
└──────────────────────────────┘
               │
┌──────────────┼───────────────────────────────┐
│ S830         ▼                                │
│  ┌──────────────────────────────┐             │
│  │   Réception code de sécurité  │─── S832     │
│  └──────────────────────────────┘             │
│               │                               │
│               ▼                               │
│  ┌──────────────────────────────┐             │
│  │  Génération code de sécurité  │─── S834     │
│  └──────────────────────────────┘             │
│               │                               │
│               ▼                               │
│  ┌──────────────────────────────┐             │
│  │ Comparaison code de sécurité  │─── S836     │
│  └──────────────────────────────┘             │
│               │                               │
│               ▼                               │
│  ┌──────────────────────────────┐             │
│  │          Définition dt        │─── S838     │
│  └──────────────────────────────┘             │
│ Détermination dt                              │
└──────────────┼────────────────────────────────┘
               │
┌──────────────┼────────────────────────────────┐
│ S840         ▼                                │
│  ┌──────────────────────────────┐             │
│  │  Détermination premier code   │─── S842     │
│  │     de sécurité corrigé       │             │
│  └──────────────────────────────┘             │
│               │                               │
│               ▼                               │
│  ┌──────────────────────────────┐             │
│  │  Comparaison premier code     │─── S844     │
│  │     de sécurité corrigé       │             │
│  └──────────────────────────────┘             │
│               │                               │
│               ▼                               │
│  ┌──────────────────────────────┐             │
│  │  Détermination deuxième code  │─── S846     │
│  │     de sécurité corrigé       │             │
│  └──────────────────────────────┘             │
│               │                               │
│               ▼                               │
│  ┌──────────────────────────────┐             │
│  │  Comparaison deuxième code    │─── S848     │
│  │     de sécurité corrigé       │             │
│  └──────────────────────────────┘             │
│               │                               │
│               ▼                               │
│  ┌──────────────────────────────┐             │
│  │        Modification dt        │─── S850     │
│  └──────────────────────────────┘             │
│ Détermination comportement                    │
└───────────────────────────────────────────────┘
```

**RÉFÉRENCES CITÉES DANS LA DESCRIPTION**

**Documents brevets cités dans la description**

- WO 2017212157 A
- CN 102435975
- US 2018285546 A1